# DEMANDE DE BREVET EUROPEEN

(11) **EP 0 644 073 A1**
(43) Date de publication de la demande: **22.03.1995**
(21) Numéro de dépôt: 94402097.3
(22) Date de dépôt: 21.09.1994
(51) Int. Cl.: B60H 1/00, F24F 13/14

(54) **Assemblage de clapets perfectionne**

(30) Priorité: 22.09.1993 FR 9311282
(71) Demandeur: BEHR FRANCE, F-68250 Rouffach (FR)
(72) Inventeur: Fleck, Michel, F-68500 Guebwiller (FR); Houver, Jérôme, F-68400 Riedisheim (FR)
(74) Mandataire: Ahner, Francis

(57) **Abrégé**

L'invention concerne un assemblage de clapets comprenant un premier et un deuxième clapets (100) mobiles aptes à pivoter autour d'un même axe, en particulier deux clapets d'une installation de climatisation ou de ventilation d'un véhicule automobile. Les clapets sont accouplés en rotation au moyen d'une tige de liaison (200) introduite à ses extrémités (210; 260) dans des logements respectifs (110 ; 160) des premier et deuxième clapets et coopérant par engagement positif avec ceux-ci. La tige de liaison (200) est réalisée en matière plastique et présente au moins une première extrémité (210) apte à se déformer radialement de façon élastique lors de son insertion dans le logement respectif (110) du premier clapet, pour y être retenue par friction tout en conservant une possibilité de déplacement axial.

## Description

La présente invention concerne un assemblage de clapets comprenant deux clapets mobiles, aptes à pivoter autour d'un même axe, en particulier deux clapets d'une installation de climatisation ou de ventilation d'un véhicule automobile, accouplés en rotation au moyen d'une tige de liaison introduite à ses extrémités dans des logements respectifs des clapets et coopérant par engagement positif avec ceux-ci.

Il a été proposé d'utiliser comme tige de liaison une tige métallique de section prismatique, engagée à force dans des logements de section complémentaire des clapets. Un ajustement serré de la tige dans les logements est nécessaire pour éviter l'apparition ultérieure d'un jeu radial qui, sous l'action de vibrations du véhicule, entraînerait la génération d'un cliquetis désagréable. Une fois la tige insérée à force dans les logements des clapets il devient difficile de la déplacer axialement pour ajuster le cas échéant la position des clapets en fonction des tolérances de fabrication, avec comme conséquence, le risque d'une force axiale résiduelle plaquant les deux clapets contre leurs butées latérales, entraînant un frottement augmentant l'effort de manoeuvre, et le risque de déformation des parois des conduits dans lesquels les clapets sont montés et de mauvais fonctionnement de l'installation. Par ailleurs, pour pouvoir résister aux efforts exercés lors de son insertion dans les logements, la tige de liaison est réalisée en acier, car l'emploi d'un matériau plus léger et moins résistant entraînerait un risque de flambage.

On a proposé pour remédier à ces inconvénients, dans la demande de brevet européen EP-0 411 399, de monter dans les logements des clapets des douilles intermédiaires destinées à recevoir les extrémités de la tige de liaison. Le montage des extrémités de la tige de liaison peut s'effectuer à la main, car les douilles sont aptes à se déformer radialement lors de l'insertion de la tige pour solidariser avec un ajustement serré la tige de liaison et les clapets. L'assemblage décrit dans la demande de brevet EP-0 411 399 constitue une amélioration notable par rapport aux assemblages connus car il permet l'utilisation d'une tige de liaison en aluminium, plus légère, et permet une réduction des frais de montage, puisque le montage peut s'effectuer à la main, sans installation pneumatique coûteuse.

Le modèle d'utilité DE-U-85 12 778 décrit un clapet monté à rotation dans un conduit de ventilation au moyen de deux arbres élastiques venus de formation par moulage avec le clapet. Chaque arbre élastique est fendu pour lui permettre de se déformer radialement à la traversée d'un perçage du conduit, ce dernier étant formé par l'assemblage de deux moitiés de carter. Chaque arbre élastique vient en butée par une collerette, après assemblage des deux moitiés de carter, contre une paroi du conduit. Ce montage supprime le jeu axial du volet selon son axe de rotation et permet d'éviter tout bruit de fonctionnement qui pourrait être causé dans le cas contraire par la venue en butée axiale du volet contre les parois du conduit. Toutefois, les dispersions dans les dimensions du conduit, dues aux tolérances de fabrication des moitiés de carter, se traduisent par un effort axial entraînant un frottement des collerettes du clapet sur les parois du conduit, ainsi qu'une déformation de ce dernier. Ce frottement et cette déformation peuvent conduire à une usure rapide et à un risque d'apparition, à terme, d'un bruit de fonctionnement ou d'une cassure.

La présente invention a pour objet un assemblage de clapets perfectionné remédiant aux inconvénients des assemblages connus, présentant notamment un nombre de pièces réduit par rapport à l'assemblage décrit dans la demande de brevet EP-0 411 399, tout en permettant une mise en place aisée des clapets et de la tige de liaison, ainsi qu'une possibilité de rattrapage des tolérances de fabrication. L'invention y parvient par le fait que la tige de liaison est réalisée en matière plastique et présente au moins une première extrémité apte à se déformer radialement de façon élastique lors de son insertion dans un logement respectif d'un premier clapet pour y être retenue par friction tout en conservant une possibilité de déplacement axial. Ainsi, dans l'invention, la tige de liaison est simplement retenue par friction, et puisqu'elle conserve une possibilité de déplacement axial, le rattrapage des tolérances de fabrication s'effectue sans effort axial excessif susceptible de s'accompagner d'une déformation d'une paroi de l'installation et d'un frottement préjudiciable.

Avantageusement, la tige de liaison comporte à sa première extrémité deux branches à introduire dans un logement d'un premier type du premier clapet, aptes à se déformer élastiquement en rapprochement l'une de l'autre lors de l'introduction dans ledit logement du premier type pour retenir avec frottement la tige de liaison dans ce dernier.

Avantageusement, la tige de liaison est retenue axialement par encliquetage à une deuxième extrémité dans un logement d'un deuxième type du deuxième clapet, dans une position axiale relative fixe par rapport à ce dernier.

Avantageusement, les deux clapets comportent respectivement deux logements du premier type identiques ainsi que deux logements du deuxième type identiques, et de préférence les deux clapets sont identiques, le logement du deuxième type du premier clapet étant apte à recevoir une extrémité d'un levier d'entraînement en rotation des clapets, ayant une forme semblable à celle de la deuxième extrémité de la tige de liaison.

Avantageusement, la tige de liaison comporte à sa première extrémité une collerette apte à venir axialement en butée contre un bord dudit logement du premier type du premier clapet, prolongée axialement en éloignement de l'extrémité opposée par une portion de tige de section non circulaire, puis par lesdites branches, ces dernières étant munies à leur extrémité libre et sur leurs faces opposées de bossages aptes à venir en appui sur deux faces internes opposées du logement, ce dernier présentant une section interne complémentaire de celle de ladite portion de section non circulaire.

Avantageusement, la tige de liaison comporte à sa deuxième extrémité une collerette apte à venir axialement en butée contre un bord dudit logement du deuxième type du deuxième clapet, prolongée en éloignement de la première extrémité par deux branches aptes à se déformer élastiquement en rapprochement l'une de l'autre lors de l'insertion dans le logement, l'une des branches comportant une dent d'encliquetage apte à s'engager, au terme de ladite insertion, dans un évidement du logement pour retenir axialement la tige de liaison dans une position axiale relative fixe par rapport à ce dernier.

Avantageusement, les branches de la deuxième extrémité de la tige de liaison présentent des surfaces opposées cylindriques de révolution centrées sur l'axe de pivotement des clapets, ladite dent d'encliquetage formant saillie sur l'une de ces surfaces cylindriques, une nervure étant formée en saillie sur l'autre de ces surfaces cylindriques, pour s'engager dans une rainure correspondante du logement du deuxième type du deuxième clapet afin d'accoupler en rotation la tige de liaison et ce dernier.

D'autres caractéristiques et avantages de la présente invention apparaîtront à la lecture de la description détaillée qui va suivre, d'un exemple de réalisation non limitatif de l'invention et à l'examen du dessin annexé sur lequel :
- la figure 1 est une vue en perspective, partielle, d'un assemblage de clapets conforme à l'invention,
- la figure 2 est une vue de face d'un clapet représenté sur la figure 1,
- la figure 3 est une section selon le trait de coupe III-III de la figure 2,
- la figure 4 est une section selon le trait de coupe IV de la figure 3,
- la figure 5 est une section, partielle, selon le trait de coupe V de la figure 3,
- la figure 6 est une vue de côté selon la flèche VI de la figure 2,
- la figure 7 est une vue de côté selon la flèche VII de la figure 2,
- la figure 8 est une section selon le trait de coupe VIII-VIII de la figure 2,
- la figure 9 montre, à échelle agrandie, des détails de la figure 8,
- la figure 10 est une section, partielle, selon le trait de coupe X-X de la figure 8,
- la figure 11 est une vue en section, partielle, prise selon le trait de coupe XI-XI de la figure 2,
- la figure 12 est une vue de face de la tige de liaison,
- la figure 13 est une vue selon la flèche XIII de la figure 12,
- la figure 14 est une coupe selon le trait de coupe XIV-XIV de la figure 12,
- la figure 15 est une coupe selon le trait de coupe XV-XV de la figure 12,
- la figure 16 est une coupe selon le trait de coupe XVI-XVI de la figure 12, et
- la figure 17 est une section dans un plan contenant l'axe de pivotement des deux clapets reliés par la tige de liaison.

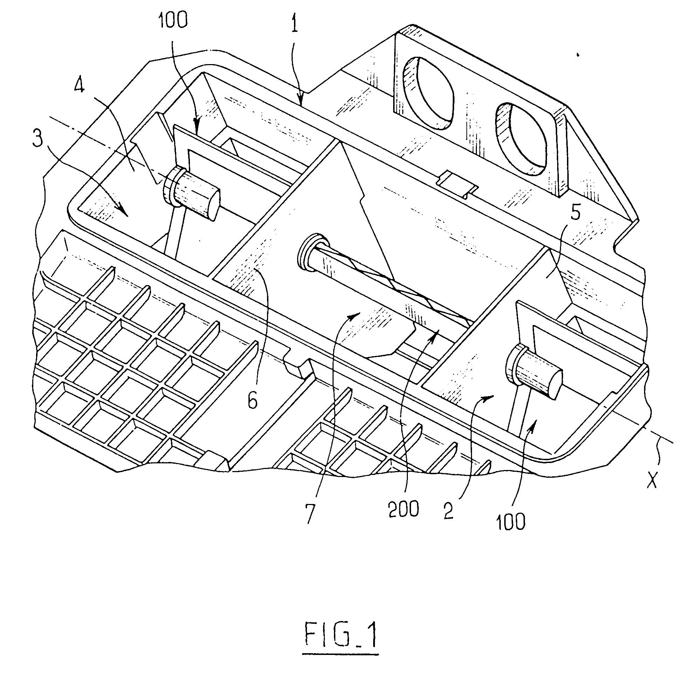

On a représenté sur la figure 1, de façon partielle et schématique, une installation 1 de ventilation d'un véhicule automobile, apte à commander le départ d'un flux d'air chaud ou froid vers deux orifices de sortie situés dans l'habitacle du véhicule. Ces deux orifices de sortie sont destinés par exemple au dégivrage du pare-brise et débouchent à sa base. Dans l'exemple décrit, l'installation 1 comprend deux moitiés de carter assemblées l'une à l'autre, chaque moitié de carter comprenant un conduit dans lequel circule de l'air destiné à l'un des orifices précités et à l'intérieur duquel est monté à pivotement un volet 100. Les deux moitiés de carter sont assemblées de sorte que les deux volets 100 pivotent autour d'un même axe de rotation X. Les deux conduits, référencés respectivement 2 et 3 pour chaque moitié de carter, ménagent entre eux, lorsque les deux moitiés de carter sont assemblées, comme représenté sur la figure 1, un passage central 7, délimité selon l'axe X par des parois 5 et 6 planes et parallèles entre elles. Les clapets 100 sont accouplés en rotation par une tige de liaison 200 s'étendant selon l'axe X à travers le passage central 7 et sont entraînés simultanément en rotation par un dispositif d'entraînement connu en lui-même et non représenté, accouplé en rotation au clapet de droite sur la figure 1 d'une façon qui sera précisée dans la suite.

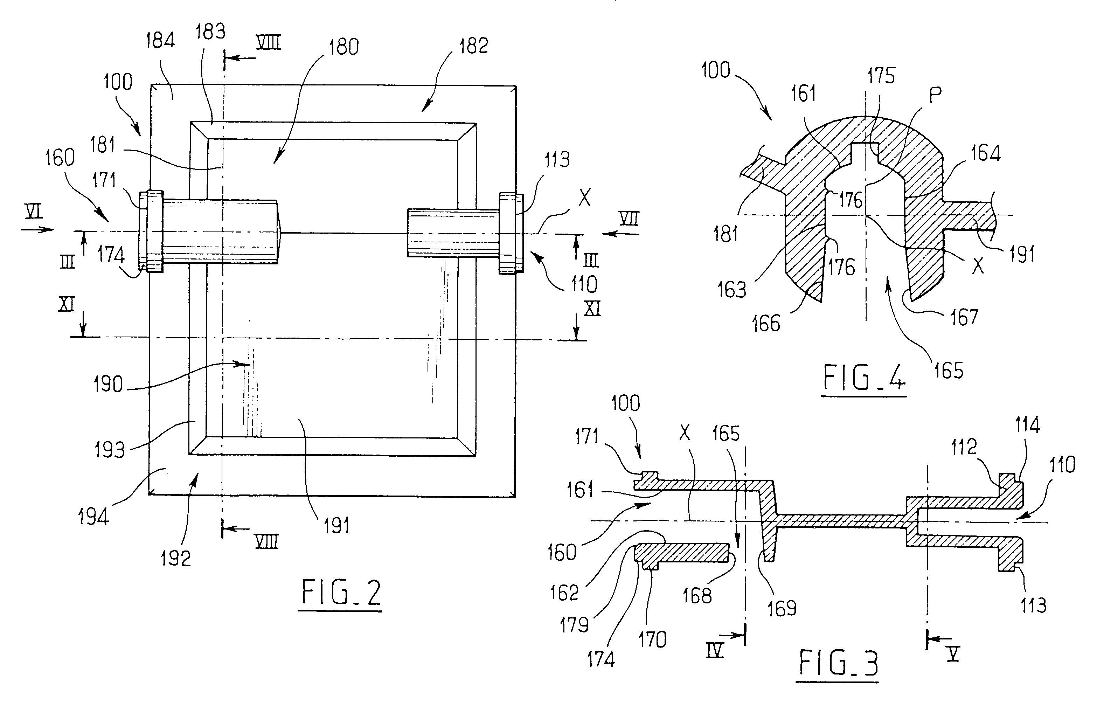

On a représenté isolément sur les figures 2 à 11 l'un des clapets 100. Ce clapet 100 comprend deux logements 110 et 160 destinés à son montage dans l'une des moitiés de carter précitées et à son entraînement en rotation autour de l'axe X. Ces logements 110 et 160 présentent dans l'exemple de réalisation décrit des formes différentes et seront respectivement appelés dans la suite "logement du premier type" et "logement du deuxième type".

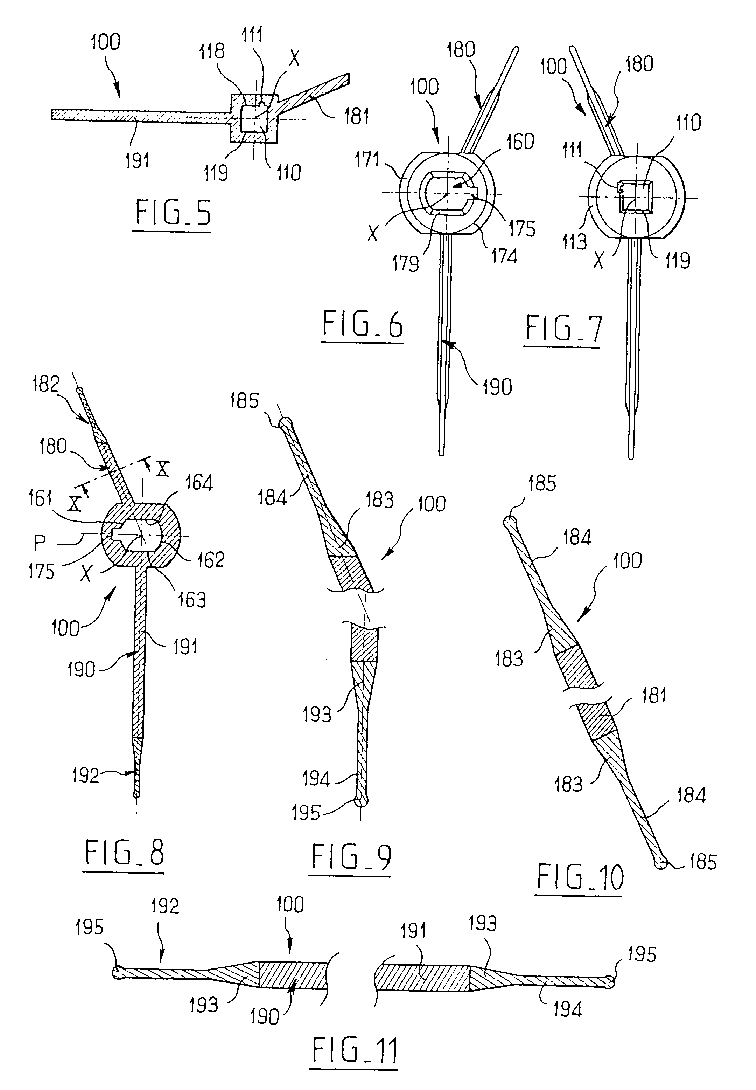

Le logement du premier type 110 s'étend selon l'axe X et présente une section interne non circulaire destinée à recevoir une première extrémité 210 de la tige de liaison 200. De préférence, comme représenté sur la figure 5, la section interne du logement 110 est carrée et ce dernier comporte une rainure d'indexage 111 débouchant à l'intérieur du logement sur une face plane 118. La nervure d'indexage 111 s'étend selon l'axe X sur toute la profondeur du logement 110 et elle est destinée à recevoir une nervure 246 de forme complémentaire ménagée sur la première extrémité 210 de la tige de liaison 200, pour l'assemblage dans une position angulaire relative déterminée autour de l'axe X du clapet 100 et de la tige de liaison 200. L'ouverture du logement 110 est bordée extérieurement par une collerette épaulée 112, présentant une surface 114 cylindrique de révolution autour de l'axe X et un flanc transversal 113, perpendiculaire à l'axe X. La collerette épaulée 112 est destinée à être insérée dans un perçage prévu sur une paroi 4 de la moitié de carter située à gauche sur la figure 1 ou sur la paroi 5 de la moitié de carter située à droite sur la figure 1, selon que la collerette épaulée 112 appartient au clapet 100 situé à gauche ou à droite sur cette figure. La surface cylindrique de révolution 114 assure le guidage en rotation autour de l'axe X du clapet 100 dans ce perçage tandis que le flanc transversal 113 vient axialement en butée contre la paroi bordant ce perçage pour limiter l'enfoncement du clapet dans ce dernier.

Le logement du deuxième type 160 est ouvert du côté opposé au logement 110 et présente une forme généralement symétrique par rapport à un plan P contenant l'axe X et contenu dans le plan de coupe de la figure 3. Le logement 160 est délimité intérieurement, comme représenté plus particulièrement sur les figures 4 et 8, par deux surfaces opposées 161 et 162 généralement cylindriques de révolution autour de l'axe X et s'étendant chacune sur un secteur angulaire de 45° environ de part et d'autre du plan P. Les deux surfaces 161 et 162 sont reliées entre elles par des surfaces opposées 163 et 164 généralement planes et parallèles. Un évidement 165 apte à servir à l'encliquetage d'une dent 281 d'une deuxième extrémité 260 de la tige de liaison 200 est ménagé dans le fond du logement 160 sur la face 162 et débouche sur l'extérieur du clapet 100. L'évidement 165 est délimité par une surface conique, destiné à faciliter l'opération de démoulage du clapet. Les lignes d'intersection 166 et 167 de cette surface conique avec le plan de coupe de la figure 4 se raccordent sur les surfaces 163 et 164 et divergent en éloignement de l'axe X en formant un angle de 5° avec le plan P. Les lignes d'intersection de cette surface conique avec le plan de coupe de la figure 3 sont référencées respectivement 168 et 169 pour la plus proche et la plus éloignée de l'ouverture du logement 160. La ligne 169 se situe dans le prolongement de la paroi de fond du logement 160.

L'ouverture du logement 160 est bordée par une collerette épaulée 170 présentant une surface 174 cylindrique de révolution autour de l'axe X et un flanc transversal 171 perpendiculaire à l'axe X. La collerette 170 est destinée au montage du clapet 100 dans un perçage de la paroi 6 de la moitité de carter située à gauche sur la figure 1 ou dans un perçage d'une paroi 8 de la moitié de carter située à droite sur la figure 1, selon qu'il s'agit du clapet situé à gauche ou à droite sur cette figure. La surface cylindrique 174 présente le même rayon que la surface cylindrique 114 et elle est destinée à guider en rotation le clapet 100 autour de l'axe X. Le flanc transversal 171 vient axialement en butée contre la paroi bordant le perçage précité pour limiter l'enfoncement du clapet dans ce dernier.

Une rainure 175 débouche dans le logement 160 pour recevoir une nervure de forme complémentaire 271 ménagée sur la deuxième extrémité 260 de la tige de liaison 200, afin d'assurer la transmission d'un couple en rotation entre le clapet 100 et la tige de liaison 200, par engagement positif de la nervure 271 dans la rainure 175.

Deux tétons coniques 176 d'angle au sommet 90° forment saillie sur la surface 163, sur une faible épaisseur (à titre indicatif 0,25 mm dans l'exemple de réalisation décrit) pour éliminer un jeu de montage de la deuxième extrémité 200 dans le logement 160.

Les logements 110 et 160 se situent sur la ligne de jonction de deux ailettes 180 et 190 respectivement situées de part et d'autre du plan P. L'ailette 190 s'étend perpendiculairement au plan P et contient l'axe X et l'ailette 180 s'étend selon un plan contenant l'axe X et formant un angle de 24° avec le plan de l'ailette 190. De préférence, les ailettes 180 et 190 sont réalisées par moulage dans deux matières plastiques de dureté différente. Plus particulièrement, les ailettes 180 et 190 comportent une partie centrale rigide (respectivement référencée 181 et 191) venue de formation avec la paroi du clapet formant les logements 110 et 160 et une partie périphérique plus souple, apte à se déformer élastiquement pour s'appliquer de façon étanche sur un siège de clapet à l'intérieur du conduit. Les parties souples des ailettes 180, 190 (respectivement référencées 182 et 192) s'étendent chacune selon une ligne en U sur tout le pourtour des parties centrales 181 et 191. Chaque partie souple (respectivement 182 et 192) présente une portion d'épaisseur décroissante vers l'extérieur (respectivement référencée 183 et 193), prolongée, en éloignement de la partie centrale rigide (respectivement 181 et 191), par une portion d'épaisseur constante (respectivement référencée 184 et 194), munie en extrémité d'un bourrelet (respectivement référencé 185 et 195) de section transversale circulaire.

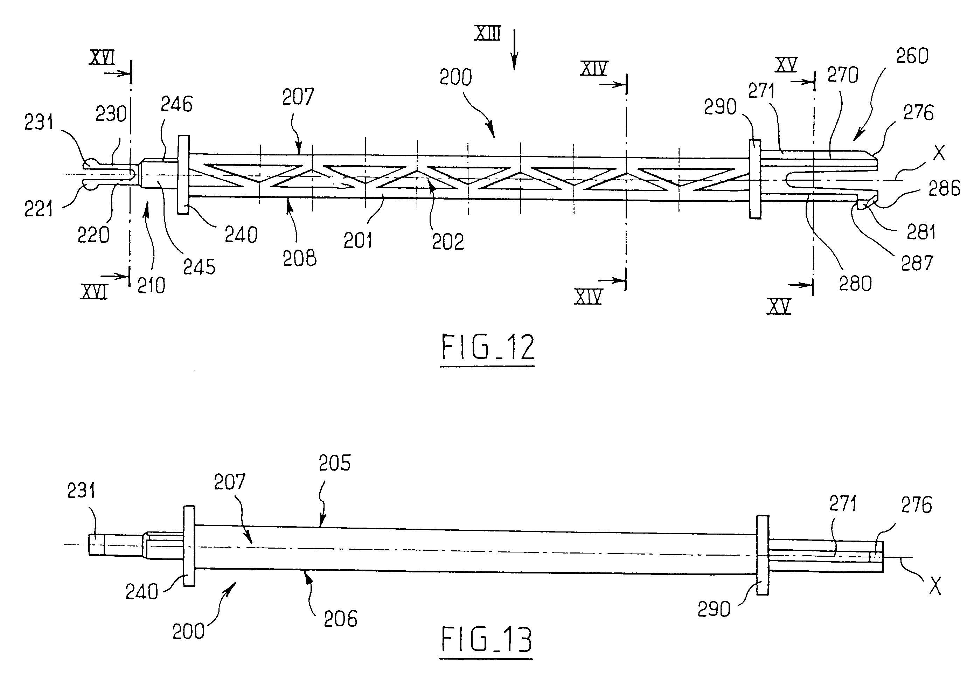

On a représenté sur les figures 12 à 16 la tige de liaison 200, à introduire par ses extrémités 210 et 260 dans les logements 110 et 160 respectifs des clapets 100. La tige de liaison 200 présente un corps 201 de section transversale généralement carrée, délimité par deux faces opposées 207, 208 planes et parallèles entre elles et à l'axe X reliées par deux faces opposées 205 et 206 sur lesquelles sont ménagés des évidements 202 en forme de triangle destinés à conférer à la tige de liaison 200, en utilisant un minimum de matière, une résistance à la flexion et à la torsion maximum. Le corps 201 de la tige de liaison 200 est délimité axialement par deux collerettes annulaires centrées sur l'axe X, référencées 240 et 290. Le diamètre externe de ces collerettes 240 et 290 correspond au diamètre des surfaces cylindriques 114 et 174 des collerettes épaulées 112 et 170.

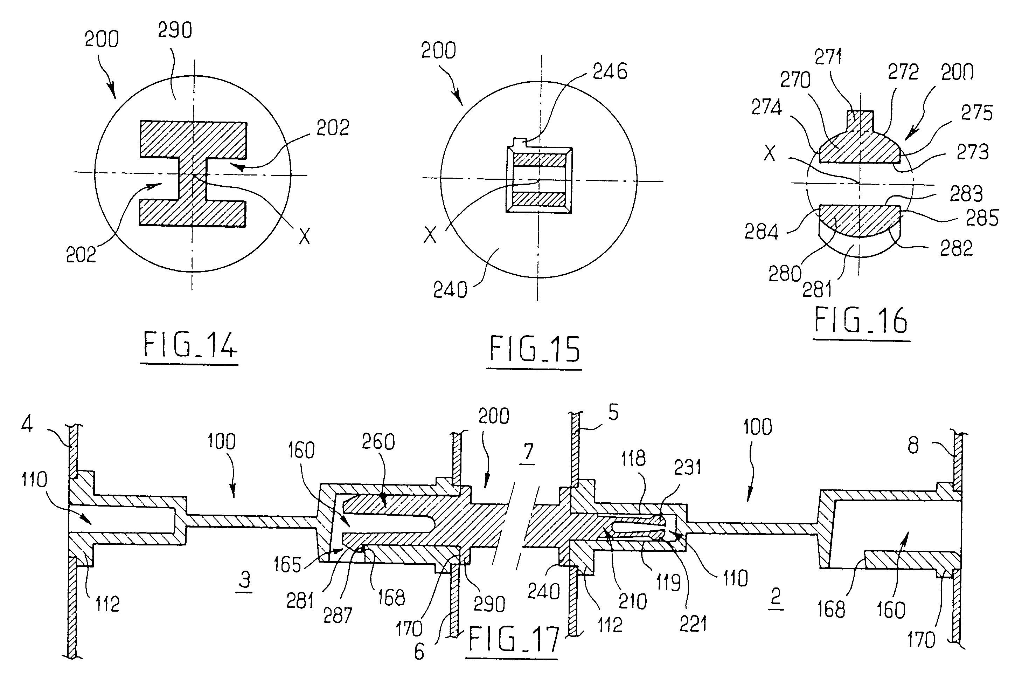

Le corps 201 de la tige de liaison 200 est prolongé, au-delà de la collerette 240 et en éloignement de la deuxième extrémité 260, par une portion 245 de section complémentaire de la section interne du logement 110 et sur laquelle est ménagée la nervure d'indexage 246 conformée pour s'engager dans la rainure 111 précitée. La portion 245 se prolonge, en éloignement de la deuxième extrémité 260, par une partie élastiquement déformable constituée de deux branches 220 et 230. Ces dernières s'étendent en regard l'une de l'autre parallèlement à l'axe X, se raccordent à une extrémité sur la portion 245, et délimitent entre elles une fente en forme de U. Les branches 220 et 230 présentent sur la plus grande partie de leur longueur une section constante de forme rectangulaire aplatie comme représenté sur la coupe de la figure 16, et sont munies en extrémité de bossages demi-cylindriques respectifs 221 et 231 formant saillie sur leurs faces externes opposées. Les bossages 221 et 231 sont demi-cylindriques autour d'axes parallèles entre eux et aux grandes faces des branches 220 et 230 et orthogonaux à l'axe X et leurs sommets sont écartés l'un de l'autre d'une distance supérieure à la distance entre la face interne 118 du logement 100 sur laquelle est ménagée la rainure 111 et la face opposée 119. Les branches 220 et 230 sont aptes à se déformer élastiquement en rapprochement l'une de l'autre par appui des bossages 221 et 231 contre les faces 118 et 119 lorsque l'extrémité 210 de la tige de liaison 200 est insérée dans le logement 110, comme représenté sur la figure 17. L'insertion dans le logement 110 des branches 220 et 230 est limitée par butée axiale de la collerette 240 sur la face frontale de la collerette épaulée 112.

Le corps 201 de la tige de liaison 200 est prolongé au-delà de la collerette 290 et en éloignement de la première extrémité 210 par deux branches 270 et 280 s'étendant en regard l'une de l'autre parallèlement à l'axe X. Les branches 270 et 280 se raccordent à une extrémité sur la collerette 290 et délimitent entre elles une fente en forme de U. La branche 280 présente sur une plus grande partie de sa longueur une section constante, délimitée extérieurement par une surface cylindrique 282 de révolution autour de l'axe X et intérieurement par une surface plane 283, se raccordant sur la surface cylindrique 282 par deux parois opposées planes et parallèles 284 et 285. La branche 280 est munie à son extrémité libre, sur sa face externe opposée à la branche 270, de la dent d'encliquetage 281 précitée formant saillie sur la surface cylindrique 282. Cette dent 281 présente, en direction de l'extrémité libre de la branche, une surface biseautée 286 et se raccorde du côté de la collerette 290 sur la surface 282 par un flanc 287 perpendiculaire à l'axe X. La branche 270 présente, sur la plus grande partie de sa longueur, une section constante, délimitée, comme représenté sur la figure 15, par une surface 272 généralement cylindrique de révolution autour de l'axe X, munie en son sommet de la nervure 271 et par une surface plane 273 parallèle à la surface 283 et s'étendant en regard de cette dernière. La surface 273 se raccorde à la surface 272 par deux surfaces opposées 274 et 275 planes et parallèles entre elles et situées respectivement dans le prolongement des surfaces 284 et 285 de la branche 280. La nervure 271 s'étend sur toute la longueur de la branche 270 et présente au niveau de l'extrémité libre de celle-ci une surface biseautée 276. L'angle dièdre formé entre les surfaces biseautées 276 et 286 vaut 60°.

La mise en place du dispositif de réglage selon l'invention va maintenant être décrite, en référence aux figures 1 et 17. On commence par mettre en place le clapet de gauche entre les parois 4 et 6 délimitant le conduit 3 de la moitié de carter située à gauche sur la figure 1. La paroi 6 est apte à se déformer élastiquement en écartement de la paroi 4 pour permettre l'insertion des collerettes épaulées 112 et 170 dans les perçages des parois 4 et 6 prévus à cet effet. Après montage du clapet de gauche entre les parois 4 et 6, la deuxième extrémité 260 de la tige de liaison 200 est insérée dans le logement 160 du clapet 100. Les surfaces biseautées 276 et 286 facilitent l'insertion des branches 270 et 280 dans le logement 160 et la branche 280 est apte à se déformer élastiquement en rapprochement de la branche 270 par appui de la dent 280 contre la surface 162. Au terme de l'insertion de l'extrémité 260 dans le logement 160, la dent 281 s'encliquète dans l'évidement 165 et retient la tige 200 fixement dans le logement 160.

Le clapet de droite est ensuite monté entre les parois 5 et 8 du conduit 2 de l'autre moitié du carter, située à droite sur la figure 1. Lors de la mise en place du clapet de droite, la paroi 5 est apte à se déformer élastiquement en écartement de la paroi 8 pour permettre l'insertion des collerettes épaulées 112 et 170 dans les perçages prévus à cet effet sur les parois 5 et 8. Les deux moitiés de carter sont ensuite positionnées avec leurs parois 5 et 6 en regard et sont rapprochées pour être assemblées. L'extrémité 210 de la tige de liaison 200 pénètre alors dans le logement 110 du clapet de droite. L'enfoncement de l'extrémité 210 dans le logement 110 dépend des tolérances de fabrication des deux moitiés de carter. L'enfoncement peut être maximal comme représenté sur la figure 17, la collerette 240 venant en butée axialement sur la face frontale de la collerette 112 du clapet de droite, ou moindre, en fonction des tolérances de fabrication des deux moitiés de carter. Lors de l'insertion de l'extrémité 210 de la tige 200 dans le logement 110, les deux branches 220 et 230 se déforment élastiquement en rapprochement l'une de l'autre et, en tendant à reprendre leur état initial, pressent les bossages 221 et 231 contre les faces 118 et 119 du logement 110 pour retenir par friction la tige de liaison 200 dans ce dernier. Un levier d'entraînement des deux clapets et de la tige de liaison 200, présentant une partie d'extrémité identique à la partie d'extrémité 260 de la tige de liaison 200, est inséré dans le logement 160 du clapet de droite jusqu'à encliquetage dans l'évidement 165.

Les tétons 176 s'appliquent respectivement sur les surfaces 274 et 284 de l'extrémité 260 pour éviter un jeu entre les branches 270 et 280 et les surfaces opposées 163 et 164.

L'insertion des extrémités de la tige de liaison 200 dans les logements 160 et 110 peut aisément s'effectuer à la main, et la complémentarité de section des extrémités de la tige de liaison et des logements dans lesquels celles-ci sont introduites permet d'assurer la transmission, par engagement positif, d'un couple de rotation entre la tige de liaison et les clapets. La nervure d'indexage 246 engagée dans la rainure d'indexage 111 du premier logement 110 et la nervure 271 engagée dans la rainure 175 permettent un positionnement relatif autour de l'axe X précis des deux clapets, de sorte que ceux-ci peuvent ouvrir ou fermer les deux conduits 2 et 3 simultanément.

Finalement, l'invention permet un montage aisé et à moindre frais des clapets et de la tige de liaison et offre une possibilité de rattrapage, lors de l'assemblage des deux moitiés de carter, d'un jeu résultant des tolérances de fabrication et évite tout bruit du aux vibrations du véhicule, grâce au maintien élastique des extrémités de la tige de liaison dans les logements des clapets.

## Revendications

**1/** Assemblage de clapets comprenant un premier et un deuxième clapets (100) mobiles aptes à pivoter autour d'un même axe (X), en particulier deux clapets d'une installation (1) de climatisation ou de ventilation d'un véhicule automobile, accouplés en rotation par une tige de liaison (200) introduite à ses extrémités (210; 260) dans des logements respectifs (110; 160) des premier et deuxième clapets et coopérant par engagement positif avec ceux-ci, caractérisé en ce que la tige de liaison est réalisée en matière plastique et présente au moins une première extrémité (210) apte à se déformer radialement de façon élastique lors de l'insertion dans le logement respectif (110) du premier clapet, pour y être retenue par friction tout en conservant une possibilité de déplacement axial.

**2/** Assemblage selon la revendication 1, caractérisé en ce que la tige de liaison (200) comporte à sa première extrémité (210) deux branches (220, 230) à introduire dans un logement d'un premier type (110) du premier clapet, aptes à se déformer élastiquement en rapprochement l'une de l'autre lors de l'introduction dans ledit logement du premier type pour retenir avec frottement la tige de liaison dans ce dernier.

**3/** Assemblage selon l'une des revendications 1 et 2, caractérisé en ce que la tige de liaison (200) est retenue axialement par encliquetage à une deuxième extrémité (260) dans un logement d'un deuxième type (160) du deuxième clapet, dans une position axiale relative fixe par rapport à ce dernier.

**4/** Assemblage selon la revendication 3, caractérisé en ce que les deux clapets (100) comportent respectivement deux logements du premier type (110) identiques ainsi que deux logements du deuxième type (160) identiques, le logement du deuxième type du premier clapet étant apte à recevoir une extrémité d'un levier d'entraînement en rotation des clapets, ayant une forme semblable à celle de la deuxième extrémité de la tige de liaison.

**5/** Assemblage selon la revendication 4, caractérisé en ce que les deux clapets (100) sont identiques.

**6/** Assemblage selon la revendication 2, caractérisé en ce que la tige de liaison comporte à sa première extrémité (210) une collerette (240) apte à venir axialement en butée contre un bord dudit logement du premier type (110) du premier clapet, prolongée axialement en éloignement de l'extrémité opposée (260) par une portion (245) de tige de section non circulaire, puis par lesdites branches (220, 230), ces dernières étant munies à leur extrémité libre et sur leurs faces opposées de bossages (221, 231) aptes à venir en appui sur deux faces opposées dudit logement, ce dernier présentant une section interne complémentaire de celle de ladite portion (245) de section non circulaire.

**7/** Assemblage selon la revendication 3, caractérisé en ce que la tige de liaison comporte à sa deuxième extrémité une collerette (290) apte à venir axialement en butée contre un bord dudit logement du deuxième type du deuxième clapet, prolongée axialement en éloignement de sa première extrémité par deux branches (270, 280) aptes à se déformer élastiquement en rapprochement l'une de l'autre lors de l'insertion dans ledit logement du deuxième type du deuxième clapet, l'une (280) des branches comportant une dent d'encliquetage (281) apte à s'engager au terme de ladite insertion dans un évidement dudit logement, apte à retenir axialement la tige de liaison dans une position axiale relative fixe par rapport à ce dernier.

**8/** Assemblage selon la revendication 7, caractérisé en ce que les branches (270, 280) de la deuxième extrémité de la tige de liaison présentent des surfaces opposées (272, 282) cylindriques de révolution, centrées sur l'axe de pivotement (X) des clapets, ladite dent d'encliquetage (281) formant saillie sur l'une (282) de ces surfaces cylindriques, une nervure (271) étant formée en saillie sur l'autre (272) de ces surfaces cylindriques, pour s'engager dans une rainure correspondante du logement du deuxième type (160) du deuxième clapet afin d'accoupler en rotation la tige de liaison et ce dernier.
